# EUROPÄISCHE PATENTSCHRIFT

(11) **EP 2 755 596 B1**
(45) Veröffentlichungstag und Bekanntmachung des Hinweises auf die Patenterteilung: **07.03.2018**
(21) Anmeldenummer: 12751269.7
(22) Anmeldetag: 22.08.2012
(51) Int. Cl.: A61C 17/06, B04C 5/00, B04C 5/04, B04C 5/103

(54) **ZYKLON**
CYCLONE
SÉPARATEUR À CYCLONE

(30) Priorität: 13.09.2011 DE 102011112954
(43) Veröffentlichungstag der Anmeldung: 23.07.2014
(73) Patentinhaber: Dürr Dental AG, 74321 Bietigheim-Bissingen (DE)
(72) Erfinder: NONNENMACHER, Eberhardt, 74379 Ingersheim (DE)
(74) Vertreter: Ostertag & Partner Patentanwälte mbB
(86) Internationale Anmeldenummer: PCT/EP2012/003548
(87) Internationale Veröffentlichungsnummer: WO 2013/037448

(56) Entgegenhaltungen:
- WO-A2-01/95780
- GB-A- 2 369 291
- US-A1- 2004 211 734
- US-B1- 6 599 350

## Beschreibung

Die Erfindung betrifft einen Zyklon gemäß dem Oberbegriff des Anspruchs 1.

Derartige Zyklone sind in unterschiedlicher Ausführung für unterschiedliche Technikbereiche bekannt.

So beschreibt beispielsweise die US 2004/211734 A1 einen Zyklon zum Zerlegen von Gemisch, mit welchem Feststoffe aus Flüssigkeiten abgeschieden werden. Der Zyklon eines Staubsaugers umfasst dabei eine obere und eine untere Wirbelumkehrplatte, mit welcher die Bewegungsrichtung des Zyklonwirbels umgekehrt wird.

Ferner ist in der GB 2 369 291 A ein Zyklon mit einer Zyklonhaube und einem darunter angeordneten Sammelbehälter beschrieben, welche durch eine schräge Trennwand voneinander getrennt sind.

Auch die WO 01/95780 beschreibt einen Staubsauger mit einem Zyklon, bei welchem ein unterer Sammelbehälter durch eine schraubenförmige Trennplatte von der Zyklonkammer getrennt ist.

In der US 6,599,350 B1 ist ein auf dem Zyklonprinzip basierender Abluftfilter für den Fahrzeugtank eines Automobils beschrieben. Dabei ist ebenfalls unterhalb eines Zyklonraums über einem Sammelabschnitt eine Trennscheibe angeordnet.

Die vorliegende Erfindung bezieht sich insbesondere auf solche Zyklone, welche zum Zerlegen von an dentalen Arbeitsplätzen anfallenden Gemischen in ihre Komponenten verwendet werden. Derartige Gemische enthalten gasförmige Anteile in Form von Luft, flüssige Anteile in Form von Wasser, Speichel, Blut und feste Anteile in Form von Bohrklein wie zerspantes Zahnmaterial und zerspante Zahnfüllungen wie insbesondere Amalgampartikel.

Im dentalen Bereich werden derartige Zyklone dazu verwendet, feste und flüssige Komponenten von der Saugmaschine fernzuhalten, mit welcher aus dem Mund eines Patienten abgesaugt wird.

Insbesondere bei Anwendungen, bei welchen die im Zyklon abgeschiedene Flüssigkeit zusammen mit dort abgeschiedenen Feststoffpartikeln über gehäusefeste Leitungen an einen zentralen Amalgamabscheider weitergeleitet werden, hat man ein Interesse daran, dass die Flüssigkeit intermittierend in größeren Mengen über die Leitungen geschickt wird, da sich dann Feststoffpartikel weniger in den Leitungswänden bleibend anlagern. In diesen Fällen hat ein unterer Abschnitt des Zyklons auch die Funktion eines Zwischenspeichers. Auch im Hinblick auf geringe Lärmentwicklung ist es vorteilhaft, einen unteren Sammelabschnitt des Zyklons nicht ständig mit einer Abwasserleitung kommunizieren zu lassen.

Zyklone, die an dentalen Arbeitsplätzen verwendet werden, werden oft in einen Behandlungsstuhl integriert. Hier steht nur ein begrenzter Einbauraum zur Verfügung. Deshalb ist es vorteilhaft, wenn ein solcher Zyklon radikal und auch axial kompakt baut.

Die bekannten Zyklone für dentale Anwendungen haben mechanisch und elektrisch aufwendigen Aufbau. Durch die vorliegende Erfindung soll daher ein Zyklon, der sich insbesondere zur Anwendung im dentalen Bereich eignet, geschaffen werden, der bei weiterhin guten Trenneigenschaften einfachen Aufbau und kompakte Abmessungen aufweist.

Diese Aufgabe ist erfindungsgemäß gelöst durch einen Zyklon mit den im Anspruch 1 angegebenen Merkmalen.

Bei dem erfindungsgemäßen Zyklon ist derjenige Bereich des Trennabschnittes, bei welchem die abgeschiedne Luft abgezogen wird, durch eine körperliche Sperre vom Sammelabschnitt des Zyklons getrennt. Diese Trennplatte verhindert zum einen, dass der abgesaugte Luftstrom Flüssigkeitsteilchen oder Schaumteilchen aus dem oberen Abschnitt des Sammelabschnittes mitreisst. Die Trennplatte hat ferner eine Drall brechende Wirkung. Schließlich ist die Trennplatte im Hinblick auf eine effektive Umlenkung der Luft in den sie abführenden Bereich des Trennabschnittes von Vorteil.

Aufgrund der Beruhigungsplatte erhält man im Sammelabschnitt nur schwache Bewegungen der abgeschiedenen Flüssigkeit. Dies ist im Hinblick auf das Vermeiden eines Mitreissens flüssiger und fester Bestandteile aus dem oberen Abschnitt des Sammelbehälters von Vorteil.

Vorteilhafte Weiterbildungen der Erfindung sind in Unteransprüchen angegeben.

Mit der Weiterbildung der Erfindung gemäß Anspruch 2 wird eine besonders gute dynamische fluidische Trennung zwischen dem Absaugbereich des Trennabschnittes und dem Sammelabschnitt erhalten.

Die Weiterbildung der Erfindung gemäß Anspruch 3 ist so im Hinblick auf ein günstiges Umlenken der gasförmigen Komponenten in den Absaugbereich des Trennabschnittes von Vorteil als auch im Hinblick auf ein Abfließen abgeschiedener flüssiger und gegebenenfalls fester Gemsichanteile in Richtung zum Sammelabschnitt von Vorteil.

Mit der Weiterbildung der Erfindung gemäß Anspruch 4 wird erreicht, dass der Rand der Trennplatte glatt durchgängig ist, sich dort also keine Wirbel bilden.

Bei einem Zyklon gemäß Anspruch 5 befindet sich zwischen der Trennplatte und der Innenfläche des Trennabschnittes ein vorzugsweise sichelförmiger Durchgang, dessen breiteste Stelle beid er tiefsten Stelle der schräggestellten Trennplatte liegt. Dies ist im Hinblick auf günstige Strömungsverhältnisse und günstige Ablösung von flüssigen und festen Komponenten von der Trennplatte von Vorteil.

Die Weiterbildung der Erfindung gemäß Anspruch 6 ist imHinblick auf einfache Herstellung der Trennplatte und einfacher Montage derselben von Vorteil. Auch erhält man so eine besonders gute Drall brechende Wirkung.

Die Maßnahme des Anspruchs 7 ist im Hinblick auf einfache Herstellbarkeit der verschiedenen Teile des Zyklons als Spritzgußteile von Vorteil.

Bei einem Zyklon gemäß Anspruch 8 bilden sich auf der Trennplatte nur wenig Ablagerungen.

Dem gleichen Ziel dient auch die gemäß Anspruch 9 vorgeschlagene Antihaftschicht.

Die Weiterbildung der Erfindung gemäß Anspruch 10 ist im Hinblick darauf vorteilhaft, dass möglichst wenig flüssige oder feste Anteile von den gasförmigen Komponenten mitgerissen werden, wenn diese eine verhältnismäßig scharfe Änderung ihrer Bewegungsrichtung erfahren, um in den Gasführbereich des Trennabschnittes zu kommen.

Im Hinblick auf einfach Herstellung des Zyklons aus geometrisch einfachen Spritzteilen ist es von Vorteil, wenn das Gasabführrohr und sein Leitschirm ein einziges vorzugsweise gespritztes Teil darstellen.

Bei einem Zyklon gemäß Anspruch 11 kann die Trennplatte zugleich dazu verwendet werden, Pegelfühler zu tragen, welche das Nieveau der im Sammelabschnitt vorliegenden flüssigen und/oder festen Bestandteile messen.

Die Weiterbildung der Erfindung gemäß Anspruch 12 ist wiederum im Hinblick auf einfache Herstellung des Zyklons aus Spritzteilen von Vorteil.

Bei einem Zyklon gemäß Anspruch 13 laufen auf der Beruhigungsplatte etwa abgeschiedene flüssige und feste Bestandteile unter dem Einfluss der Schwerkraft in den Sammelabschnitt hinein.

Die Weiterbildung der Erfindung gemäß Anspruch 14 ist im Hinblick auf eine besonders effektive Drallbrechung im Sammelabschnitt von Vorteil.

Nachstehend wird die Erfindung anhand eines Ausführungsbeispieles unter Bezugnahme auf die Zeichnung näher erläutert. In dieser zeigen:
- Figur 1:: Einen axialen Schnitt durch einen Zyklon mit einem oberen Trennabschnitt und einem unten liegenden Sammelabschnitt für flüssige und gegebenenfalls feste Anteile des zugeführten Gemisches, wobei der Schnitt der Schnittlinie A-A von Figur 3 entspricht;

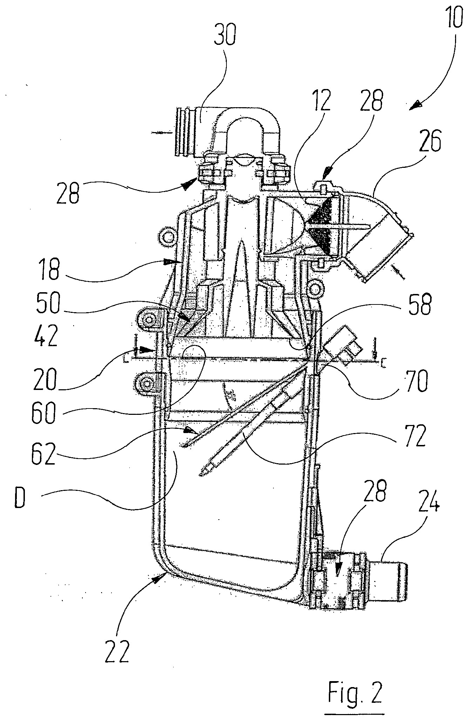

- Figur 2:: Einen achsparallelen Schnitt durch den in Figur 1 gezeigten Zyklon längs der Schnittlinie B-B von Figur 3;
- Figur 3:: Eine Aufsicht auf den in den Figuren 1 und 2 gezeigten Zyklon;
- Figur 4:: Eine Aufsicht auf die Unterseite eines mittleren Gehäuseabschnittes des in den Figuren 1 bis 3 gezeigten Zyklones, von welchem eine Sperrplatte getragen ist, gesehen in den Figuren 1 und 2 von unten;
- Figur 5:: Eine seitliche Ansicht des mittleren Gehäuseabschnittes gesehen in den Figuren 1 und 2 von vorne;
- Figur 6:: Eine Aufsicht auf die Unterseite des ringförmi gen mittleren Gehäuseteiles nach den Figuren .4 und 5;
- Figur 7:: Eine perspektivische Ansicht auf die Unterseite des ringförmigen mittleren Gehäuseteiles gesehen in Richtung des Pfeiles X von Figur 5;
- Figur 8:: Eine perspektivische Ansicht der Unterseite des ringförmigen mittleren Gehäuseteiles nach den Figuren 4 bis 7, gesehen in Richtung des Pfeiles Y von Figur 5;
- Figur 9:: Eine perspektivische Ansicht eines praktischen Ausführungsbeispiele eines Zyklons, der ähnlich zu dem nach Figur 1 ist; und
- Figur 10:: Eine Ansicht des Zyklons von Figur 9, schräg von unten gesehen.

In der Zeichnung ist mit 10 insgesamt ein Zyklon bezeichnet, der einen Gemisch-Einlassstutzen 12, einen Luft-Auslassstutzen 14 und einen Flüssigkeits-Auslassstutzen 16 aufweist. Über den Auslassstutzen 16 werden zusammen mit der Flüssigkeit auch gegebenenfalls Feststoffanteile abgegeben, die sich im zugeführten Gemisch befinden.

Der Zyklon 10 hat ein oberes kappenförmiges Gehäuseteil 18, ein mittleres ringförmiges Gehäuseteil 20 und ein unteres becherförmiges Gehäuseteil 22.

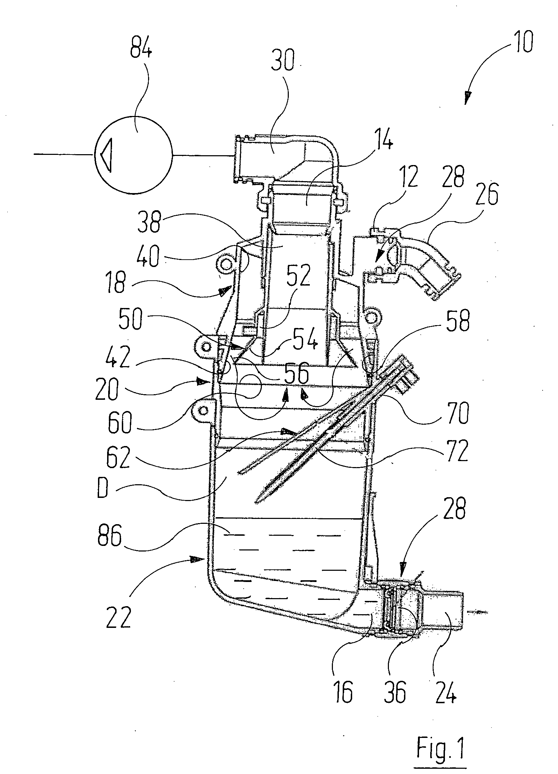

Das obere Gehäuseteil 18, welches die Form eines nach unten offenen Bechers hat, hat am in Figur 1 oberen rechten Abschnitt den Einlassstutzen 12, der mit einem Einlasswinkel 26 über eine schematisch bei 28 angedeutete Schnellkupplung verbunden ist. Die Schnellkupplung 28 kann einen Aufbau haben, wie er in der EP 0 908 659 A1 beschrieben wird, auf die dieszüglich verwiesen wird.

Über eine ähnliche Schnellkupplung ist an den Luftauslassstutzen 14 ein Luft-Auslasswinkel 30 angesetzt. Auf den Flüssigkeits-Auslassstutzen 16 ist wider über eine Schnellkupplung 28 ein Schlauchstutzen 34 angesetzt. Im Inneren des Flüssigkeits-Auslassstutzen 16 ist ein Rückschlagventil vorgesehen, welches eine flache Ventilplatte 36 umfasst.

Am Gehäuseteil 18 ist nach unten hängend ein Luftabführrohr 38 angesetzt. Dieses durchsetzt axial eine obere zylindrische Zyklonkammer 40 welche durch die Innenfläche des Gehäuseteiles 18 begrenzt ist und ragt hinein bis etwa in die axiale Mitte einer weiteren kegelstumpfförmigen Zyklonkammer 42 des Gehäuseteiles 18.

Im Übergangsbereich zwischen dem unteren Abschnitt des Gehäuseteiles 18 und dem oberen Abschnitt des Gehäuseteiles 20 ist das Luftabführrohr 38 von einer angeformten Leitglocke 50 umgeben, welche einen oberen wesentlichen zylindrischen Glockenabschnitt 52 und einen von dessen unterem Rand getragenen kegelstumpfförmigen Glockenabschnitt 54 aufweist. Zwischen dem freien Rand des Glokkenabschnittes 54 und der Innenfläche der Zyklonkammer 42 verbleibt nur ein verhältnismäßig schmaler Ringspalt 56, dessen Breite etwa 5 - 10 Prozent, vorzugsweise etwa 7 Prozent des Radius der Innenfläche des Glockenabschnittes 54 gemessen auf gleicher Höhe beträgt.

Das mittlere Gehäuseteil 20 hat in seinem oberen Abschnitt einen kleinen Öffnungswinkel aufweisende kegelstumpfförmige Aufnahme 58, in welcher ein entsprechend kegelstumpfförmiger Endabschnitt des oberen Gehäuseteiles 18 einsitzt. Die Aufnahme 58 ist unten durch eine umlaufende Schulter 60 begrenzt. Auf Höhe der Schulter 60 ist an die in Figur 1 rechts gelegene Umfangswand des Gehäuseteiles 20 eine Trennplatte 62 angeformt, welche unter einem Winkel von etwa 35 Grad zur Horizontalen geneigt ist.

Die Trennplatte 62 hat eine Fußlinie 64, welche in axialer Sicht einem Viertel des Kreisbogens entspricht, der durch die Durchschneidung der Innenfläche des Gehäuseteiles 20 mit einer transversalen Ebene gebildet ist. Die Fußlinie 64 ist bei Betrachtung der Trennplatte 62 in zur Plattenebene senkrechter Richtung ein Viertel einer Ellipse.

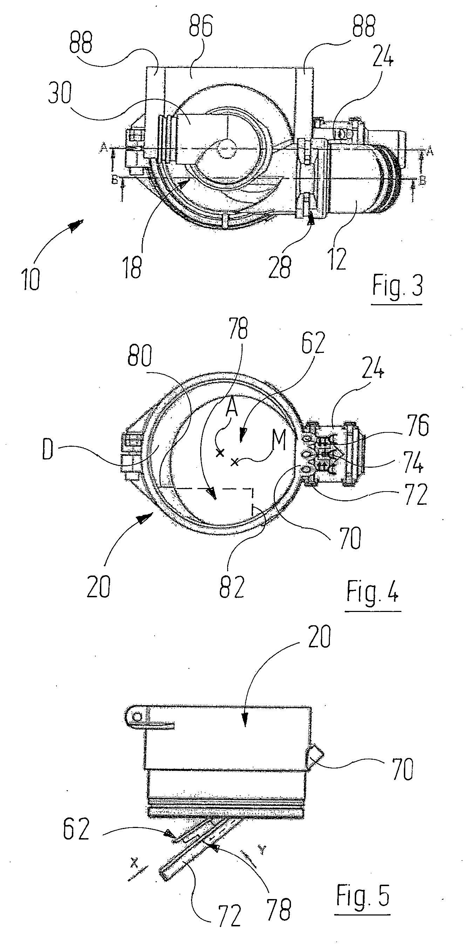

Anschließend an die Endpunkte der Fußlinie 64 hat eine frei Randkante 66 der Trennplatte 62 eine in axialer Richtung gesehen kreisförmige Gestalt. Sie entspricht in dieser Sicht einem Dreiviertelkreis, der auf die Endpunkte der Fußlinie 64 aufgesetzt ist. Der Mittelpunkt M der Randkante 66 ist von der Achse A des Gehäuseteiles 18 in Figur 4 nach rechts und unten versetzt. Auf diese Weise ist ein Durchgang D, der durch die Randkante 66 einerseits und die Innenfläche des Gehäuseteiles 20 andererseits begrenzt ist, in axialer Sicht kreis-sichelförmig. Von einem Punkt größter Breite des Durchganges nimmt die Durchgangsbreite in Umfangsrichtung nach beiden Seiten kontinuierlich ab.

Die Randkante 66 hat in zur Ebene der Trennplatte 62 senkrechter Richtung gesehen die Form eines sich über 270 Grad erstreckenden Ellipsenabschnittes.

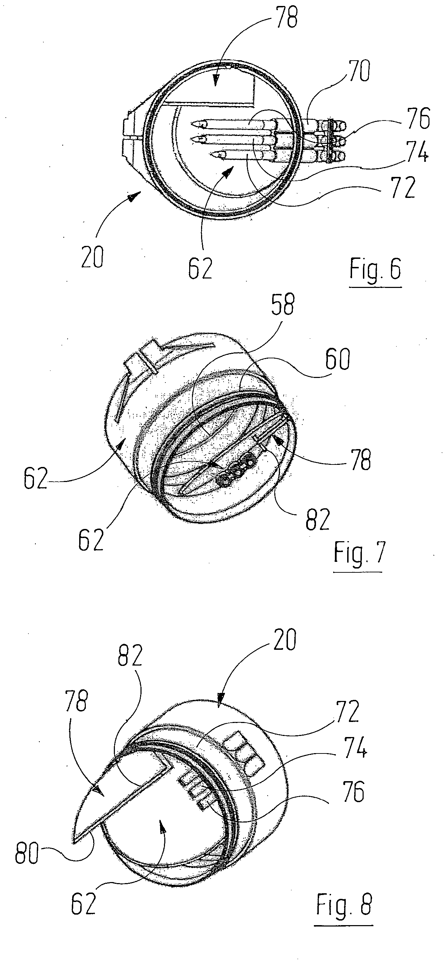

Der Fußlinie 64 der Trennplatte 62 benachbart ist an die Unterseite der Trennplatte 62 ein Sockelabschnitt 70 angeformt, welcher zur Aufnahme von drei Pegelfühlern 72, 74, 76 (vergleiche insbesondere Figur 6), dient, die unterschiedlich weit in das Innere des Gehäuseteiles 22 ragen.

Das untere Gehäuseteil 22 hat die Form eines Bechers mit zum Auslassstutzen 24 hin schräg abfallendem Boden.

In das untere Gehäuseteil 22 ragt in Figur 1 von oben und hinten eine Beruhigungsplatte 78, welche an das untere Ende des Gehäuseteiles 20 angeformt ist, wie gut aus den Figuren 6 und 8 erkennbar. Der Anstellwinkel der Beruhigungsplatte 78 zur Horizontalen beträgt etwa 30 - 40 Grad, vorzugsweise etwa 35 Grad.

Die Beruhigungsplatte 78 ist an ihrem radial innen liegenden Ende durch eine Sekante 80 begrenzt.und hat längs der Innenseite einen zur Plattenebene senkrechten Steg 82.

Wie aus der Zeichnung ersichtlich, überdeckt die Trennplatte 62 bei axialer Betrachtung das Ende des Luftabführrohres 38 in radialer Richtung vollständig. Dabei ist die Trennplatte 62 in axialer Richtung vom Ende des Luftabführrohres 38 beabstandet und gegenüber diesem verkippt, wie aus Figur 1 ersichtlich.

### Der oben beschriebene Zyklon arbeitet folgendermaßen:

Unter Betriebsbedingungen ist, wie aus Figur 1 ersichtlich, an den Luft-Auslassstutzen 30 eine Saugmaschine 84 angeschlossen, welche das Innere des Zyklons 10 unter Unterdruck setzt. Damit saugt die Saugmaschine 84 über den Einlasswinkel 26 ein am dentalen Arbeitsplatz erzeugtes Gemisch über eine nicht dargestellte Kanüle und einen zu dieser führenden Verbindungsschlauch an.

Das angesaugte Gemisch wird tangential in die Zyklonkammer 40 eingespeist, bewegt sich wendelförmig in dieser nach unten und erreicht die kegelstumpfförmige Zyklonkammer 42. Bei diesem Kreisen des Gemisches über den Wänden der Zyklonkammern 40 und 42 werden flüssige und feste Bestandteile radial nach außen bewegt. Diese Bestandteile bewegen sich dann im Gehäuseteil 20 und im Gehäuseteil 22 weiter nach unten und bilden dort ein Flüssigkeitsvolumen 86, welches ggf. zusätzlich noch feste Anteile enthält. Die Luftanteile des angesaugten Gemisches werden über der Trennplatte 62 nach oben in das Luftabführrohr 38 gesaugt, wobei das Strömungsbild insgesamt im Wesentlichen einem halben Torus entspricht, wie durch Pfeile in Figur 1 angedeutet. Die Leitglocke 50 sorgt dabei für eine scharfe Richtungsänderung der Luft, was die Trennung von gasförmigen und nicht gasförmigen Komponenten begünstigt.

Bei diesem Ansaugen von Luft in das Luftabführrohr 38 ist der Raum über der Oberseite des Pegels des Flüssigkeitsvolumens 86 nicht direkt mit dem offenen Ende des Luftabführrohres 38 verbunden, da die Trennplatte 62 diesen Weg versperrt. Im Kopfraum des Gehäuseteiles 22 befindliche Schaumanteile oder Tröpfchen werden somit am Eintreten in das Luftabführrohr 38 gehindert.

Die Strömung der Luft vom Ringspalt 56 in das Luftabführrohr 38 erfolgt teilweise tangential zur Oberfläche der Trennplatte 62, wodurch sich eine Reinigungswirkung für die Letztere ergibt. Flüssige und feste Bestandteile werden daran gehindert, an der Trennplatte 62 haften zu bleiben, strömen vielmehr unter Schwerkrafteinwirkung zum unteren Ende der Trennplatte 62, von wo sie dann in das Innere des Gehäuseteiles 22 abtropfen.

Erreicht der Pegel des Flüssigkeitsvolumens 86 die Pegelfühler 72, 74, 76, so werden je nach Höhe des erreichten Pegelstandes unterschiedliche Fühlerausgangssignale erzeugt, die zum Steuern der Entleerung des Gehäuseteiles 22 und zum Veranlassen eines Nothaltes für die Saugmaschine 84 verwendet werden können.

So kann zum Beispiel bei Erreichen des mittleren Pegelfühlers 74 eine Lenzpumpe aktiviert werden, die über das Rückschlagventil 36 Flüssigkeit aus dem Gehäuseteil 22 absaugt. Diese Lenzpumpe kann dann wieder abgeschaltet werden, wenn das Flüssigkeitsvolumen 86 einen vorgebenen unteren Pegel erreicht hat oder die Lenzpumpe anfängt Luft zu ziehen.

Der Pegelfühler 76 kann dazu verwendet werden festzustellen, dass der Pegel des Flüssigkeitsvolumens 86 einen vorgegebenen maximalen Pegel überschritten hat, was auf einen Fehler im Arbeiten des Zyklons 10 hinweist. Das entsprechende Signal kann dann dazu verwendet werden, die Saugmaschine 84 abzuschalten.

Die verschiedenen Teile des oben beschriebenen Zyklons sind Spritzteile, welche sich preisgünstig herstellen lassen. Die verschiedenen Teile sind durch Steckverbindungen miteinander verbunden, die gegebenenfalls mit zusätzlichen Rastmitteln (nicht gezeigt) versehen sein können. An den verschiedenen Steckverbindungen sind Dichtringe vorgesehen, wie aus der Zeichnung ersichtlich.

Die Oberflächen der Kunststoffteile, welche mit Gemisch oder Gemischkomponenten in Berührung kommen, sind mit hoher Oberflächenqualität hergestellt und haben vorzugsweise eine geschlossene glatte Oberfläche. Vorzugsweise können die mit Gemischkomponenten in Berührung kommenden Oberflächen des Zyklons mit einer Antihaftschicht versehen werden, welche vorzugsweise hydrophob ist. Geeignetes Haftschichtmaterial ist zum Beispiel Polytetrafluorethylen.

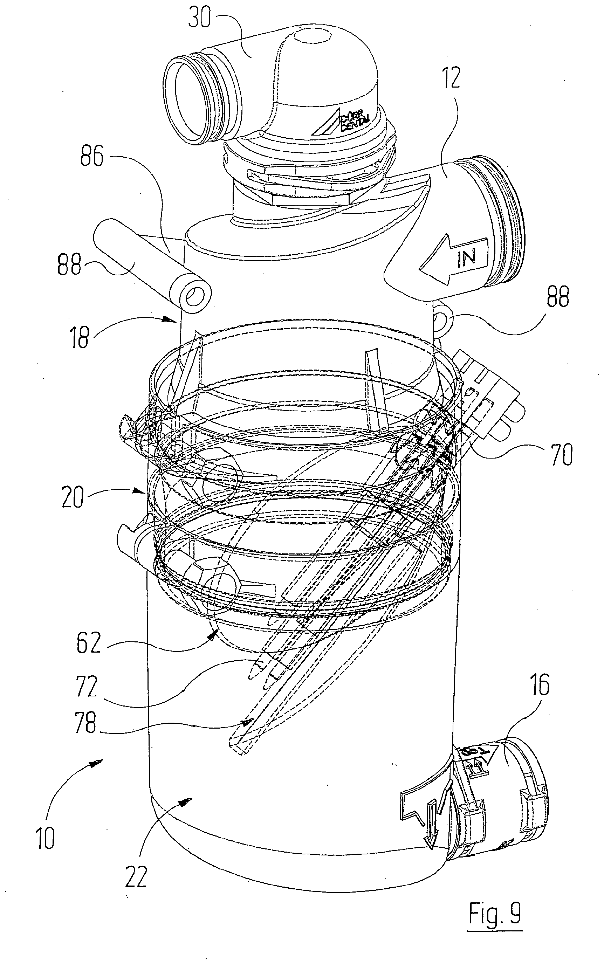

In Figur 9 ist ein Ausführungsbeispiel eines Zyklones widergegeben, der vom Grundaufbau her dem nach Figur 1 stark ähnelt. Nicht sichtbare Komponenten sind gestrichelt eingetragen. Man erkennt hier anschaulich die Lage der Bauteile 62 und 78 zu einander.

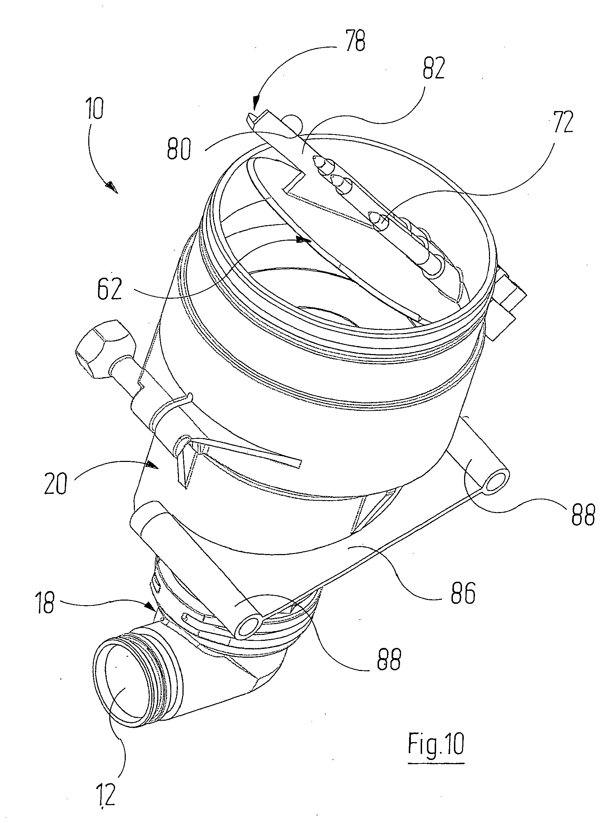

Auch aus Figur 10 ist die Lage und Orientierung der Bauteile 62 und 78 gut erkennbar.

In den Figuren 9 und 10 sowie in Figur 3 ist bei 86 eine Montageplatte gezeigt, welche an das Gehäuseteil 20 angeformt ist und bei ihren beiden seitlichen Rändern jeweils eine Traghülse 88 aufweist, die eine Befestigungsschraube (nicht gezeigt) aufnehmen kann, um den Zyklon an einem dentalen Stuhl oder einem anderen tragenden Element anzubringen.

## Patentansprüche

1. Zyklon zum Zerlegen von Gemischen, welche mindestens eine nicht gasförmige Komponente und eine gasförmige Komponente aufweisen, mit einem Trennabschnitt (18, 20), welcher eine radial äußere Zyklonwand (40, 42) und eine radial innere Gasabführeinrichtung (38, 50) aufweist, und mit einem unter dem Trennabschnitt (18, 20) angeordneten Sammelabschnitt (22) für abgeschiedene nicht gasförmige Komponenten (86),
wobei
zwischen dem Trennabschnitt (18, 20) und dem Sammelabschnitt (22) eine Trennplatte (62) angeordnet ist, welche von der Gasabführeinrichtung (38, 50) axial beabstandet ist und die Gasabführeinrichtung (38, 50) bei axialer Betrachtung zumindest teilweise überdeckt, und
unterhalb der Trennplatte (62) eine in den Sammelabschnitt (22) ragende Beruhigungsplatte (78) angeordnet ist, um im Sammelabschnitt (22) Bewegungen der abgeschiedenen Flüssigkeit zu beruhigen,
**dadurch gekennzeichnet, dass**
die Beruhigungsplatte (78) unter einem Anstellwinkel von 30 - 40 Grad zur Horizontalen angeordnet ist.

2. Zyklon nach Anspruch 1, **dadurch gekennzeichnet, dass** sich die Trennplatte (62) in radialer Richtung im Wesentlichen über die Gasabführeinrichtung (38, 50) erstreckt.

3. Zyklon nach Anspruch 2, **dadurch gekennzeichnet, dass** die Trennplatte (62) schräg zur Achse des Trennabschnittes (18, 20) geneigt ist.

4. Zyklon nach Anspruch 3, **dadurch gekennzeichnet, dass** die Trennplatte (62) in axialer Richtung gesehen im Wesentlichen kreisförmige Randkontur hat.

5. Zyklon nach Anspruch 4, **dadurch gekennzeichnet, dass** in axialer Richtung gesehen zwischen dem Rand der Trennplatte (62) und der Innenfläche des Trennabschnittes (18, 20) ein Durchgang (D) verbleibt, der in axialer Richtung gesehen vorzugsweise sichelförmige Kontur hat.

6. Zyklon nach einem der Ansprüche 1 bis 5, **dadurch gekennzeichnet, dass** die Trennplatte (62) längs eines Teiles ihres Umfanges mit dem Trennabschnitt (18, 20) verbunden ist.

7. Zyklon nach einem der Ansprüche 1 bis 6, **dadurch gekennzeichnet, dass** der Trennabschnitt (18, 20) ein unteres Ringteil (20) umfasst, an welches die Trennplatte (62) angeformt ist.

8. Zyklon nach einem der Ansprüche 1 bis 7, **dadurch gekennzeichnet, dass** die Trennplatte (62) zumindest an ihrer Oberseite eine glatt geschlossene Oberfläche hat.

9. Zyklon nach einem der Ansprüche 1 bis 8, **dadurch gekennzeichnet, dass** die Trennplatte (62) zumindest an ihrer Oberseite eine Antihaftschicht trägt.

10. Zyklon nach einem der Ansprüche 1 bis 7, **dadurch gekennzeichnet, dass** die Gasabführeinrichtung (38, 50) ein axiales Gasabführrohr (38) aufweist, das einen sich in Richtung zur Trennplatte (62) erweiternden, vorzugsweise kegelförmig erweiternden Leitschirm (50) trägt.

11. Zyklon nach einem der Ansprüche 1 bis 10, **dadurch gekennzeichnet, dass** die Trennplatte (62) mit Aufnahmemitteln (70) für mindestens einen Pegelfühler (72) versehen ist, vorzugsweise auf ihrer Unterseite.

12. Zyklon nach Anspruch 1, **dadurch gekennzeichnet, dass** ein Randabschnitt der Beruhigungsplatte (78) von einer Umfangswand des Trennabschnittes (18, 20) getragen ist.

13. Zyklon nach Anspruch 12, **dadurch gekennzeichnet, dass** die Beruhigungsplatte (78) in radialer Einwärtsrichtung nach unten abfällt.

14. Zyklon nach einem der Ansprüche 1 bis 13, **dadurch gekennzeichnet, dass** die Beruhigungsplatte (78) die Form eines Kreisabschnittes hat.

15. Zyklon nach Anspruch 14 **dadurch gekennzeichnet, dass** der Kreisabschnitt neben einem in Sekantenrichtung verlaufenden Randabschnitt (80) einen hierzu senkrecht verlaufenden Randabschnitt (82) aufweist.

## Claims

1. Cyclone for separating mixtures which have at least one non-gaseous component and a gaseous component, with a separating section (18, 20), which has a radially outer cyclone wall (40, 42) and a radially inner gas discharge device (38, 50), and with a collecting section (22), arranged under the separating section (18, 20), for deposited non-gaseous components (86),
wherein
a separating plate (62) is arranged between the separating section (18, 20) and the collecting section (22), is at an axial distance from the gas discharge device (38, 50) and, when viewed axially, at least partially covers the gas discharge device (38, 50), and
a calming plate (78) protruding into the collecting section (22) is arranged under the separating plate (62), in order to calm movements of the deposited liquid in the collecting section (22), **characterized in that** the calming plate (78) is arranged at an angle of adjustment of 30 - 40 degrees to the horizontal.

2. Cyclone according to Claim 1, **characterized in that** the separating plate (62) extends substantially over the gas discharge device (38, 50) in the radial direction.

3. Cyclone according to Claim 2, **characterized in that** the separating plate (62) is inclined obliquely to the axis of the separating section (18, 20).

4. Cyclone according to Claim 3, **characterized in that** the separating plate (62) has a substantially circular peripheral contour when seen in the axial direction.

5. Cyclone according to Claim 4, **characterized in that**, when seen in the axial direction, a passage (D) which preferably has a crescent-shaped contour when seen in the axial direction remains between the periphery of the separating plate (62) and the inner surface of the separating section (18, 20).

6. Cyclone according to one of Claims 1 to 5, **characterized in that** the separating plate (62) is connected along part of its circumference to the separating section (18, 20).

7. Cyclone according to one of Claims 1 to 6, **characterized in that** the separating section (18, 20) comprises a lower ring part (20), on which the separating plate (62) is integrally formed.

8. Cyclone according to one of Claims 1 to 7, **characterized in that** the separating plate (62) has a smoothly uninterrupted surface at least on its upper side.

9. Cyclone according to one of Claims 1 to 8, **characterized in that** the separating plate (62) bears a nonstick coating at least on its upper side.

10. Cyclone according to one of Claims 1 to 7, **characterized in that** the gas discharge device (38, 50) has an axial gas discharge pipe (38), which bears a preferably conically widening guide shield (50), widening in the direction of the separating plate (62).

11. Cyclone according to one of Claims 1 to 10, **characterized in that** the separating plate (62) is provided with receiving means (70) for at least one level sensor (72), preferably on its underside.

12. Cyclone according to Claim 1, **characterized in that** a peripheral section of the calming plate (78) is borne by a circumferential wall of the separating section (18, 20).

13. Cyclone according to Claim 12, **characterized in that** the calming plate (78) descends downwards in the radially inward direction.

14. Cyclone according to one of Claims 1 to 13, **characterized in that** the calming plate (78) has the form of a circular segment.

15. Cyclone according to Claim 14, **characterized in that** the circular segment has in addition to a peripheral section (80) running in the direction of the secant, a peripheral section (82) running perpendicularly thereto.

## Revendications

1. Cyclone destiné à décomposer des mélanges qui présentent au moins un composant non gazeux et un composant gazeux, doté d'une partie de séparation (18, 20), qui présente une paroi de cyclone radialement extérieure (40, 42) et un moyen d'évacuation de gaz radialement intérieur (38, 50), et doté d'une partie de collecte (22) disposée sous la partie de séparation (18, 20) pour les composants non gazeux (86) déposés,
dans lequel
entre la partie de séparation (18, 20) et la partie de collecte (22) est disposée une plaque de séparation (62) qui est espacée axialement du moyen d'évacuation de gaz (38, 50) et qui, vue axialement, recouvre au moins partiellement le moyen d'évacuation de gaz (38, 50), et
sous la plaque de séparation (62) est disposée une plaque de tranquillisation (78) qui fait saillie dans la partie de collecte (22) pour tranquilliser les mouvements du liquide déposé dans la partie de collecte (22),
**caractérisé en ce que**
la plaque de tranquillisation (78) est disposée avec un angle d'inclinaison de 30 à 40 degrés par rapport à l'horizontale.

2. Cyclone selon la revendication 1, **caractérisé en ce que** la plaque de séparation (62) s'étend sensiblement au-delà du moyen d'évacuation de gaz (38, 50) dans la direction radiale.

3. Cyclone selon la revendication 2, **caractérisé en ce que** la plaque de séparation (62) est inclinée obliquement par rapport à l'axe de la partie de séparation (18, 20).

4. Cyclone selon la revendication 3, **caractérisé en ce que** la plaque de séparation (62) a, vue dans la direction axiale, un contour de bord sensiblement circulaire.

5. Cyclone selon la revendication 4, **caractérisé en ce que**, vu dans la direction axiale, il reste entre le bord de la plaque de séparation (62) et la surface intérieure de la partie de séparation (18, 20) un passage (D) qui a de préférence, vu dans la direction axiale, un contour en forme de croissant.

6. Cyclone selon l'une des revendications 1 à 5, **caractérisé en ce que** la plaque de séparation (62) est reliée à la partie de séparation (18, 20) le long d'une partie de son pourtour.

7. Cyclone selon l'une des revendications 1 à 6, **caractérisé en ce que** la partie de séparation (18, 20) comprend une partie annulaire inférieure (20) sur laquelle la plaque de séparation (62) est formée.

8. Cyclone selon l'une des revendications 1 à 7, **caractérisé en ce que** la plaque de séparation (62) a, au moins sur sa face supérieure, une surface lisse fermée.

9. Cyclone selon l'une des revendications 1 à 8, **caractérisé en ce que** la plaque de séparation (62) porte, au moins sur sa face supérieure, une couche antiadhésive.

10. Cyclone selon l'une des revendications 1 à 7, **caractérisé en ce que** le moyen d'évacuation de gaz (38, 50) présente un tube d'évacuation de gaz axial (38) qui porte un écran déflecteur (50) s'élargissant, de préférence en forme de cône, en direction de la plaque de séparation (62).

11. Cyclone selon l'une des revendications 1 à 10, **caractérisé en ce que** la plaque de séparation (62) est pourvue, de préférence sur sa face inférieure, de moyens de réception (70) pour au moins un capteur de niveau (72).

12. Cyclone selon la revendication 1, **caractérisé en ce qu'**une partie de bord de la plaque de tranquillisation (78) est portée par une paroi périphérique de la partie de séparation (18, 20).

13. Cyclone selon la revendication 12, **caractérisé en ce que** la plaque de tranquillisation (78) est inclinée vers le bas dans la direction radiale vers l'intérieur.

14. Cyclone selon l'une des revendications 1 à 13, **caractérisé en ce que** la plaque de tranquillisation (78) a la forme d'un segment de cercle.

15. Cyclone selon la revendication 14, **caractérisé en ce que** le segment de cercle présente, outre une partie de bord (80) s'étendant dans la direction de la sécante, une partie de bord (82) s'étendant perpendiculairement à celle-ci.
